# EUROPÄISCHE PATENTSCHRIFT

(11) **EP 1 761 420 B1**
(45) Veröffentlichungstag und Bekanntmachung des Hinweises auf die Patenterteilung: **21.01.2015**
(21) Anmeldenummer: 05758651.3
(22) Anmeldetag: 29.06.2005
(51) Int. Cl.: B60R 25/00

(54) **SCHLIESSSYSTEM, INSBESONDERE FÜR EIN KRAFTFAHRZEUG**
LOCKING SYSTEM, ESPECIALLY FOR A MOTOR VEHICLE
SYSTEME DE FERMETURE, EN PARTICULIER POUR UN VEHICULE AUTOMOBILE

(30) Priorität: 29.06.2004 DE 102004031264; 29.06.2004 DE 102004031265
(43) Veröffentlichungstag der Anmeldung: 14.03.2007
(73) Patentinhaber: Marquardt GmbH, 78604 Rietheim-Weilheim (DE)
(72) Erfinder: STEHLE, Wolfgang, 78603 Renquishausen (DE); WEISSER, Dietmar, 78532 Tuttlingen (DE); KELLER, Juergen, Rochester, MI, 48306 (US); MATTES, Johannes, 78567 Fridingen (DE); HIPP, Uwe, 72514 Engelswies (DE); SCHWALM, Uwe, 78532 Tuttlingen-Möhringen (DE); SCHULTES, Gerhard, 8403 Graz-Lebring (AT)
(74) Vertreter: Otten, Herbert
(86) Internationale Anmeldenummer: PCT/EP2005/006962
(87) Internationale Veröffentlichungsnummer: WO 2006/000458

(56) Entgegenhaltungen:
- US-A- 5 790 015
- US-A- 5 982 295
- US-A1- 2002 008 615
- US-A1- 2003 052 539

## Beschreibung

Die Erfindung betrifft ein Verfahren zur Datenübertragung nach dem Oberbegriff des Patentanspruchs 1 sowie ein mittels eines solchen Datenübertragungsverfahrens arbeitendes Schließsystem nach dem Oberbegriff des Patentanspruchs 4.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Mittel zum Senden und/oder Empfangen von Signalen mittels einer insbesondere elektromagnetischen Trägerwelle. Wenigstens ein Signal enthält ein aus Bits bestehendes Datum. Insbesondere ist im bestimmungsgemäßen Betrieb zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, daß der Benutzer dew Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Beim bekannten Schließsystem werden die Daten amplitudenmoduliert auf der Trägerwelle übertragen. Bei Störungen kann es zum Datenverlust und daraus resultierend zum Scheitern der durch das Signal bewirkbaren Funktion kommen. Des weiteren ist die Datenrate durch das Auf- und Abschwingen des Schwingkreises, d.h. durch dessen Güte, in den Mitteln zum Senden und/oder Empfangen stark begrenzt. Damit erfüllen diese Schließsysteme nicht in allen Fällen wünschenswerte Sicherheitsanforderungen.

Desweiteren ist aus der US 2002/0008615 A1 ein Schließsystem für ein Kraftfahrzeug mit einer im Fahrzeug befindlichen Sende- und Empfangseinheit und einem tragbaren Codegeber bekannt. Ein codiertes Abfragesignal im Mikrowellenbereich wird breitbandig moduliert von der Sende- und Empfangseinheit gesendet und anschließend vom Codegeber zusätzlich moduliert zurückgesendet. Das zurückgesendete Signal wird in der Sende- und Empfangseinheit im Hinblick auf die Phasendifferenz zum gesendeten Signal ausgewertet, so daß die Entfernung des Codegebers vom Kraftfahrzeug bestimmbar ist. Die für die Entfernungsmessung verwendeten Signale können eine Phasen- oder Frequenzmodulation besitzen.

Die Verwendung einer Phasenmodulation bei der Signalübertragung für Kraftfahrzeug-Schließsysteme ist ebenfalls aus der US 5 790 015 A sowie der US 2003/0052539 A1 bekannt.

Ebenso ist es bekannt, die Daten innerhalb niederfrequenter Systeme zwischen zwei Einrichtungen amplitudenmoduliert zu übertragen. Die beiden Einrichtungen besitzen zu deren bestimmungsgemäßen Betrieb Mittel zum Senden und/oder Empfangen von Signalen mittels einer elektromagnetischen Trägerwelle im niederfrequenten Bereich. Das zwischen den beiden Einrichtungen übertragene Signal enthält ein aus Bits bestehendes Datum. Bei Störungen kann es ebenfalls zu Datenverlust bzw. zum Scheitern der durch die Datenübertragung auszulösenden Funktion kommen. Des weiteren ist wiederum die Datenrate durch das Auf- und Abschwingen des Schwingkreises, d.h. durch dessen Güte, stark begrenzt.

Der Erfindung liegt die Aufgabe zugrunde, ein als Weckverfahren einsetzbares Datenübertragungsverfahren mit verbesserter Funktionssicherheit zu schaffen. Ergänzend liegt der Erfindung die Aufgabe zugrunde, die Funktionssicherheit für das mit "Keyless"-Funktionalität ausgestattete Schließsystem zu steigern.

Diese Aufgabe wird bei einem gattungsgemäßen Datenübertragungsverfahren durch die kennzeichnenden Merkmale des Anspruchs 1 gelöst. Bei einem gattungsgemäßen Schließsystem wird diese Aufgabe durch die kennzeichnenden Merkmale des Anspruchs 4 gelöst.

Beim erfindungsgemäßen Datenübertragungsverfahren ist das Signal mittels eines Phasensprungverfahrens moduliert. Dabei ist der Wechsel eines Bits im Datum durch die sprunghafte Änderung der Phase in der Art eines Phasensprungs der Trägerwelle codiert. Durch den Einsatz des Phasensprungverfahrens anstelle der bisher üblichen Amplitudenmodulation entfallen die bei der Amplitudenmodulation notwendigen Ruhezeiten, in denen kein Träger gesendet wird. Da gerade in den Ruhezeiten die Anfälligkeit des Systems auf Störer erhöht ist, ist das Phasensprungverfahren resistent gegen Amplitudenstörer. Dadurch werden vorteilhafterweise eine bessere Störsicherheit, eine höhere Datenrate sowie eine höhere Empfindlichkeit erzielt.

Besonders vorteilhaft ist der Einsatz der Phasensprungcodierung für die Weckfunktion innerhalb eines elektronischen Systems. Hierzu ist die eine Einrichtung zwischen einem aktivierten Zustand, bei dem eine gewisse Funktionalität ermöglicht ist, und einem Ruhezustand, bei dem

lediglich eine gegenüber dem aktivierten Zustand verringerte Funktionalität ermöglicht ist, umschaltbar. Im Ruhezustand ist eine verringerte Energieaufnahme gegeben, so daß dadurch eine Energieeinsparung resultiert. Das von der anderen Einrichtung ausgesandte Signal, das nach dem Phasensprungverfahren codiert ist, schaltet dann die eine Einrichtung zwischen dem Ruhezustand und dem aktivierten Zustand um. Folglich überführt das phasencodierte Signal in der Art eines Wecksignals die jeweilige Einrichtung vom Ruhezustand in funktionssicherer Weise in den aktivierten Zustand. Weitere Ausgestaltungen der Erfindung sind Gegenstand der Unteransprüche.

Besonders einfach lassen sich die Phasensprünge beim Phasensprungverfahren erkennen und auswerten, wenn diese in etwa ganzzahlige vielfache von 90° betragen. Insbesondere sind Phasensprünge von 180° bevorzugt.

Besonders bevorzugt ist, daß die Trägerwelle für das Signal eine im induktiven, niederfrequenten (NF-)Bereich liegende Frequenz aufweist. Beispielsweise kann die Frequenz für die NF-Trägerwelle in etwa 20 kHz betragen.

Beim erfindungsgemäßen Schließsystem ist das wenigstens eine Signal mittels eines Phasensprungverfahrens moduliert. Dabei ist der Wechsel eines Bits im Datum durch die sprunghafte Änderung der Phase in der Art eines Phasensprungs der Trägerwelle codiert. Durch den Einsatz des Phasensprungverfahrens anstelle der bisher üblichen Amplitudenmodulation innerhalb des KeylessEntry/Go-Systems als Teil des Zugangs- und/oder Fahrberechtigungssystems für das Kraftfahrzeug entfallen die bei der Amplitudenmodulation notwendigen Ruhezeiten, in denen kein Träger gesendet wird.

Da gerade in den Ruhezeiten die Anfälligkeit des Systems auf Störer erhöht ist, ist das Phasensprungverfahren resistent gegen Amplitudenstörer. Dadurch wird vorteilhafterweise eine bessere Störsicherheit, höhere Datenrate sowie eine höhere Empfindlichkeit erzielt.

Besonders vorteilhaft ist der Einsatz der Phasensprungcodierung für die Weckfunktion innerhalb des Schließsystems. Es kann wenigstens eine der beiden Einrichtungen des Schließsystems zwischen einem aktivierten Zustand, bei dem eine gewisse Funktionalität ermöglicht ist, und einem Ruhezustand, bei dem lediglich eine gegenüber dem aktivierten Zustand verringerte Funktionalität ermöglicht ist, umschaltbar sein. Im Ruhezustand ist eine verringerte Energieaufnahme gegeben, so daß dadurch eine Energieeinsparung resultiert. Das eine Signal, das nach dem Phasensprungverfahren codiert ist, schaltet dann die eine Einrichtung zwischen dem Ruhezustand und dem aktivierten Zustand um, wodurch das Schließsystem mit großer Betriebssicherheit arbeitet. Weitere Ausgestaltungen der Erfindung sind Gegenstand der weiteren Unteransprüche.

Besonders einfach lassen sich die Phasensprünge beim Phasensprungverfahren erkennen und auswerten, wenn diese in etwa ganzzahlige Vielfache von 90° betragen. Insbesondere sind Phasensprünge von 180° bevorzugt.

Bei diesem Weckverfahren sendet die erste Einrichtung ein erstes elektromagnetisches Signal für die zugehörige, beispielsweise als Transponder- und/oder Funkschlüssel ausgebildete zweite Einrichtung als Wecksignal. Dadurch wird die zweite Einrichtung aus dem Ruhezustand mit gegebenenfalls verringertem Energiebedarf in den aktivierten Zustand für den

bestimmungsgemäßen Betrieb übergeführt. In einer Weiterbildung kann das erste elektromagnetische Signal wenigstens ein aus Bits bestehendes Datum in der Art eines Weck-Patterns enthalten. In diesem Weck-Pattern lassen sich dann Informationen zum jeweiligen Kraftfahrzeug, zum zugehörigen Schließsystem o. dgl. übertragen, wodurch ein spezifisches Aufwecken der jeweils zum Schließsystem zugehörigen zweiten Einrichtung ermöglicht ist, indem die zweite Einrichtung lediglich bei einem vorbestimmten Weck-Pattern in den aktivierten Zustand übergeht. Dieses Weck-Pattern für die passive Weckfunktion ist mittels des Phasensprungverfahrens auf die Trägerwelle moduliert. Wie sich dabei herausgestellt hat, kommt es kaum zu Störungen innerhalb dieses Weck-Patterns mit einem daraus resultierenden Datenverlust, wodurch ein Scheitern der passiven Weckfunktion weitgehend vermieden ist. Außerdem läßt sich eine Erhöhung der Weckreichweite und der übertragbaren Datenrate bei gleichzeitig geringerem Stromverbrauch für den das Phasensprungverfahren realisierenden integrierten Baustein erzielen.

Die erste Einrichtung kann in weiterer Ausgestaltung nach Aussenden des ersten elektromagnetischen Signals wenigstens ein weiteres, insbesondere drittes elektromagnetisches Signal als Bereichsabgrenzungssignal senden. Mit Hilfe des Bereichsabgrenzungssignals kann der Standort der zweiten Einrichtung in Bezug auf die erste Einrichtung am und/oder im Kraftfahrzeug bestimmt werden, der anschließend mit einem vierten Signal als Rückantwortsignal von der zweiten zur ersten Einrichtung gesendet wird. Sind diese Signale erfolgreich übermittelt, so wird schließlich die Authentikation der zweiten Einrichtung mittels weiterer fünfter Signale als codierte Betriebssignale durchgeführt.

Sind somit die für das Wecken sowie die Bereichsabgrenzung notwendigen Vorbedingungen nicht erfüllt, so wird die an sich aufwendige Authentikation gar nicht durchgeführt, womit eine effizientere Betriebsweise für das Schließsystem ermöglicht ist. Das der Authentikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere die Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Ergänzend oder auch alternativ kann bereits im Wecksignal diese Kennung zur Codierung des Kraftfahrzeug-Typs enthalten sein, so daß lediglich demselben Kraftfahrzeug-Typ zugeordnete zweite Einrichtungen aktiviert werden und/oder im aktivierten Zustand verbleiben sowie im aktivierten Zustand befindliche, nicht zugehörige zweite Einrichtungen in den Ruhezustand zurückgeführt werden. Dadurch ist jeweils eine weitere Steigerung in der Effizienz der Betriebsweise des Schließsystems möglich.

Besonders bevorzugt ist, für das Weck- und/oder das Bereichsabgrenzungssignal ein induktives Signal zu verwenden, indem die Trägerwelle für das erste Signal und/oder das dritte Signal und/oder Teilsignale des dritten Signals eine im induktiven, niederfrequenten (NF-)Bereich liegende Frequenz aufweist. Aufgrund der begrenzten Reichweite eines induktiven Signals läßt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz betragen.

Zweckmäßigerweise besitzt hierfür die erste Einrichtung mehrere induktive Sender beziehungsweise als induktive Sender dienende Spulen und die zweite Einrichtung einen induktiven Empfänger. Jeweils ein induktiver Sender und/oder eine Spule ist der linken Kraftfahrzeugseite, der rechten Kraftfahrzeugseite sowie dem Kraftfahrzeugheck zugeordnet.

Zur Auslösung des Wecksignals, wodurch letztendlich die Zugangs- und/oder Fahrberechtigung für das Kraftfahrzeug bereitgestellt wird, bietet sich ein durch den Benutzer manuell betätigbarer Schalter und/oder Sensor an. Der für die Zugangsberechtigung zum Kraftfahrzeug dienende Schalter bzw. Sensor, der als kapazitiv arbeitender Näherungssensor ausgestaltet sein kann, ist beispielsweise im Türgriff und/oder im Heckklappengriff des Kraftfahrzeugs angeordnet. Der Start/Stop-Schalter bzw. Sensor für die Fahrberechtigung des Kraftfahrzeugs ist beispielsweise am Gangwahlhebel, am Zündschloß, im Armaturenbrett oder in der Mittelkonsole angeordnet.

Die mit der Erfindung erzielten Vorteile bestehen insbesondere darin, daß die Störsicherheit des Datenübertragungsverfahrens verbessert ist. Weiterhin erhöht sich die Reichweite des Systems, da der Demodulator ein geringeres Signal- zu Rauschverhältnis benötigt. Schließlich erhöht sich auch die übertragbare Datenrate bei gleichzeitig geringerem Stromverbrauch für den integrierten Baustein zur Realisierung des Datenübertragungsverfahrens.

Die für das Schließsystem mit der Erfindung erzielten Vorteile bestehen insbesondere darin, daß die Störsicherheit des Schließsystems verbessert ist. Anders wie bei der herkömmlichen Amplitudenmodulation gibt es hier keine "Null"-Phasen während der Modulation, so daß eine geringere Empfindlichkeit gegen Amplitudenstörer, wie Nadelimpulse durch Störer auf Induktiv-Link, Rechteckstörer o. dgl. resultiert. Damit arbeitet das Schließsystem zuverlässig sowie funktions-/betriebssicher und bietet einen hohen Komfort für den Benutzer. Zudem ist das Schließsystem manipulationssicher und fehlertolerant, was die Diebstahlsicherheit für das Kraftfahrzeug erhöht. Außerdem vergrößert sich die Reichweite, in der die als Schlüssel dienende zweite Einrichtung abgefragt werden kann, da der Demodulator ein geringeres Signal- zu Rauschverhältnis benötigt. Desweiteren ist die Empfindlichkeit sowie auch die Reaktionszeit des gesamten Schließsystems gesteigert. Dabei wird der Energieverbrauch für die zweite Einrichtung minimiert, womit sich die Batterie-Lebensdauer für den Schlüssel erhöht. Trotz dieser Verbesserungen ist das Schließsystem kostengünstig herzustellen.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem im Kraftfahrzeug,
- Fig. 3: ein schematisches Blockschaltbild des ID-Gebers mit einem Diagramm zur Übertragung der Signale und
- Fig. 4: ein Diagramm zur Codierung eines Signals..

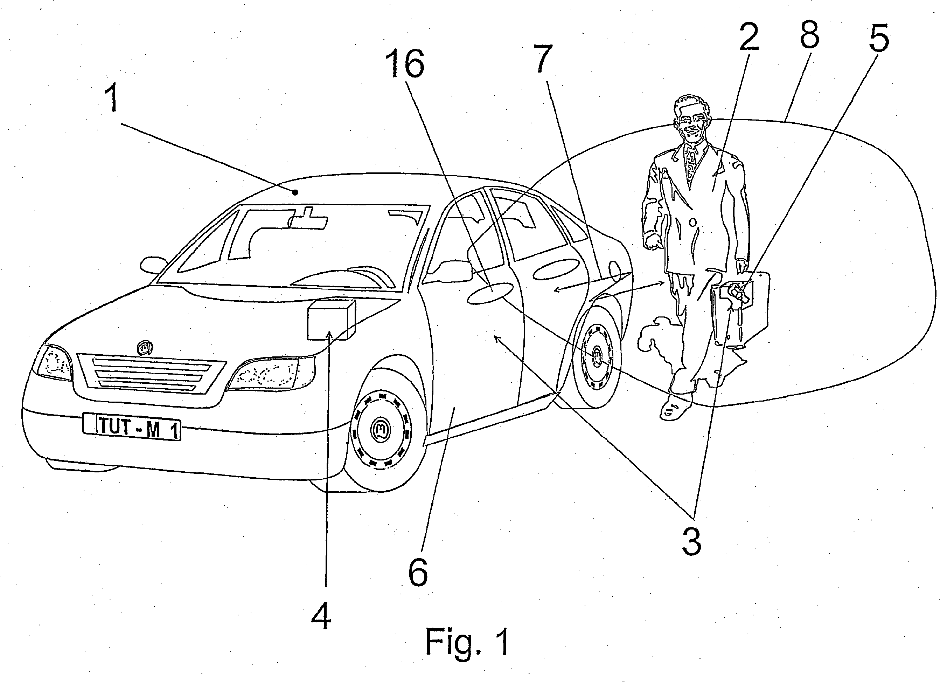

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

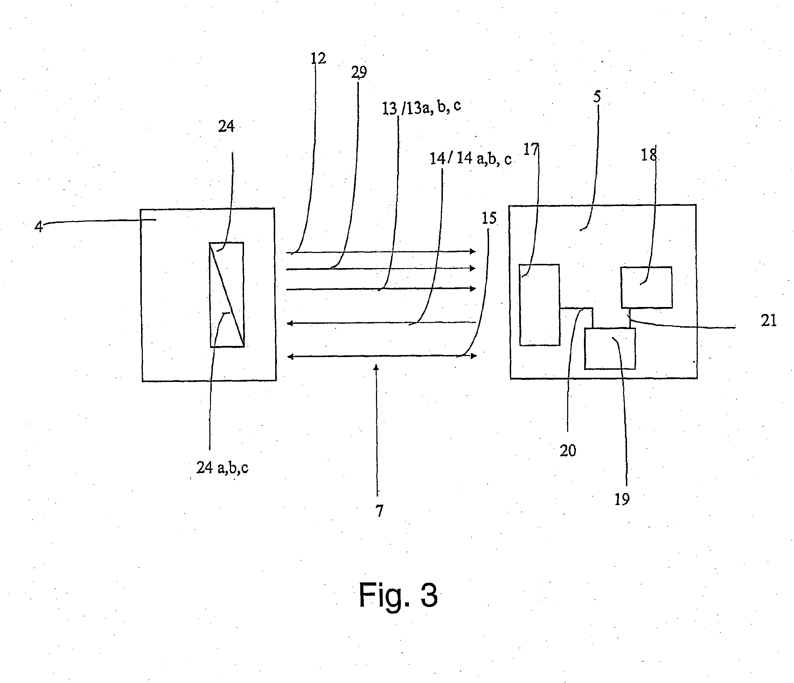

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

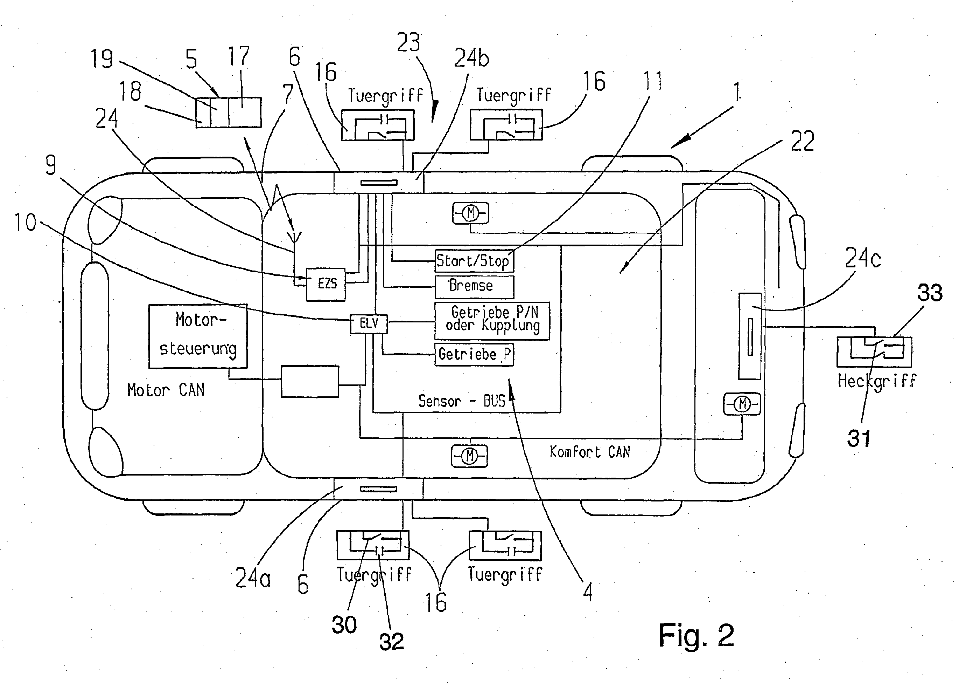

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des elektronischen Zündschlosses 9 oder der elektrischen Lenkradverriegelung 10, die in Fig. 2 zu sehen sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop- Schalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters oder Sensors vom Benutzer 2 ausgelöst. Für die Zugangsberechtigung kann es sich beispielsweise um die manuelle Betätigung des Türgriffs 16 oder des Heckgriffs 33 handeln, wie in Fig. 2 zu sehen ist. Hierzu ist im Türgriff 16 des Kraftfahrzeugs 1 ein Schalter 30 sowie im Heckgriff 33 ein Schalter 31 angeordnet. Wird ein beispielsweise kapazitiv arbeitender Näherungssensor 32 verwendet, wie ebenfalls in Fig. 2 am Türgriff 16 gezeigt ist, so kann vom Sensor 32 die Annäherung der Hand des Benutzers 2 an den Türgriff 16 detektiert werden. Für die Fahrberechtigung befindet sich ein vom Benutzer 2 manuell betätigbarer Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Um Energie zu sparen, ist wenigstens die eine der beiden Einrichtungen 4, 5 zwischen einem aktivierten Zustand, bei dem eine gewisse Funktionalität ermöglicht ist, und einem Ruhezustand, bei dem lediglich eine gegenüber dem aktivierten Zustand verringerte Funktionalität ermöglicht ist, umschaltbar. Im Ruhezustand resultiert dann aufgrund der eingeschränkten Funktionalität eine verringerte Energieaufnahme. Bevorzugterweise ist die zweite Einrichtung 5 zwischen dem Ruhezustand und dem aktivierten Zustand umschaltbar, so daß die Batterie im elektronischen Schlüssel eine verlängerte Lebensdauer aufweist. Die Einrichtung 5 wird nun mit Hilfe des Signals 12 zwischen dem Ruhezustand und dem aktivierten Zustand in komfortsteigernder Weise, ohne daß weitere Aktivitäten des Benutzers 2 erforderlich sind, umgeschaltet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Dadurch wird die zweite Einrichtung 5 aus dem Ruhezustand mit verringertem Energiebedarf in den aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

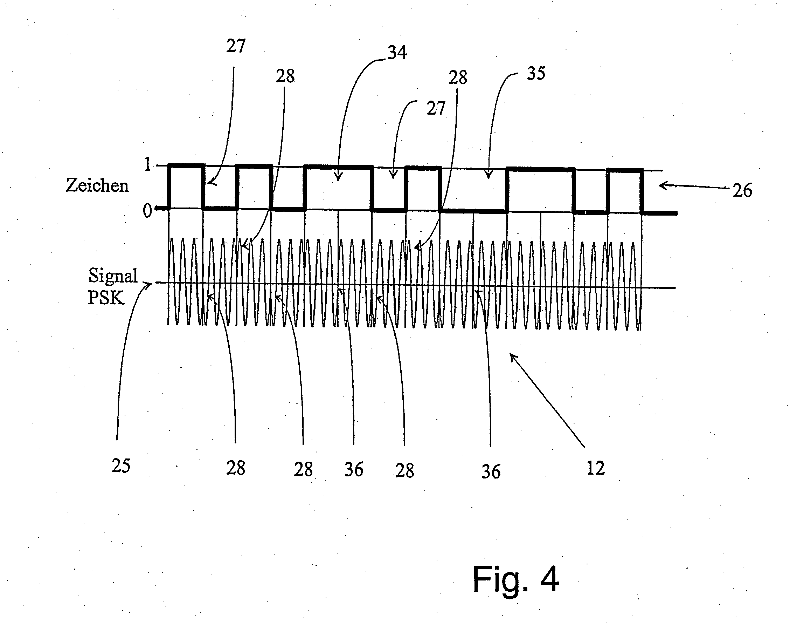

Wenigstens eines der zwischen den beiden Einrichtungen 4, 5 übertragenen Signale, hier am Beispiel des Wecksignals 12 erläutert, enthält ein Datum zur Informationsübertragung, das wiederum aus Bits einer logischen "1" sowie "0" besteht. In Fig. 4 ist die modulierte Trägerwelle 25 des Signals 12 zu sehen. Über der Trägerwelle 25 ist die Bitfolge des Datums 26 entsprechend der Modulation dargestellt. Wie man anhand von Fig. 4 sieht, ist dieses wenigstens eine Signal 12 mittels eines Phasensprungverfahrens moduliert. Hierzu ist der Wechsel 27 eines Bits im Datum 26 durch die sprunghafte Änderung der Phase in der Art eines Phasensprungs 28 der Trägerwelle 25 codiert. Der in Fig. 4 gezeigte Phasensprung 28 beträgt π bzw. 180°, womit der Bitwechsel 27 besonders einfach zu detektieren ist. Selbstverständlich können die Phasensprünge 28 jedoch auch anderweitige Größen aufweisen, wobei es sich jedoch als zweckmäßig erwiesen hat, daß die Phasensprünge 28 beim Phasensprungverfahren in etwa ganzzahlige Vielfache von π/2 bzw. 90° betragen.

Wenn kein Bitwechsel stattfindet, so findet entsprechend der Phasensprungmodulation auch kein Phasensprung statt. So sind in Fig. 4 zwei aufeinanderfolgende, gleichbleibende "1"-Bits 34 sowie zwei aufeinanderfolgende, gleichbleibende "0"-Bits 35 zu sehen. Hervorzuheben ist, daß dort die Trägerwelle 25 offensichtlich eine kontinuierlich fortlaufende Phase 36 aufweist.

Vorliegend ist also das als Wecksignal dienende erste Signal 12 mit einem Datum 26 in der Art eines Weck-Patterns versehen. Die Information im Weck-Pattern 26 besteht aus einer Kennung, wobei die Kennung den Kraftfahrzeug-Typ, das zugehörige Schließsystem, eine sonstige Information zum Kraftfahrzeug o. dgl. näher bezeichnet. Das Weck-Pattern 26 ist, wie erläutert, mittels des Phasensprungverfahrens auf die Trägerwelle 25 moduliert. Bei Bedarf kann innerhalb des Weck-Patterns 26 noch eine Präambel mit einem eingearbeiteten Datenmuster angeordnet sein, das die Polarität der mittels des Phasensprungsverfahrens modulierten Daten identifiziert. Die zweite Einrichtung 5 geht lediglich bei einem vorbestimmten Weck-Pattern 26 in den aktivierten Zustand über, so daß dadurch lediglich dem Kraftfahrzeug-Typ entsprechende zweite Einrichtungen 5 durch das erste Wecksignal 12 in den aktivierten Zustand übergeführt werden. Es läßt sich somit verhindern, daß zufällig im Wirkbereich 8 befindliche zweite Einrichtungen, die zu anderen Kraftfahrzeug-Typen gehören, aktiviert werden, was häufig auf Parkplätzen oder in Parkhäusern der Fall ist.

Beinhaltet das Weck-Pattern 26 eine Kennung zum Kraftfahrzeug-Typ, so sind nach Empfang des Wecksignals 12 zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 29 zur zweiten Einrichtung 5 als Selektionssignal, wie näher anhand von Fig. 3 zu erkennen ist. Das zweite Signal 29 enthält eine Information über die nähere Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentikation auf, so daß bei Vorhandensein beider Linien im Wirkbereich 8 lediglich eine Authentikation mit der ranghöheren Linie, die entsprechend ausgewählt wird, durchzuführen ist. Das Selektionssignal 29 kann nun zusätzlich eine Information zu den der ersten Einrichtung 4 zugeordneten Linien enthalten, um dem Schließsystem 3 gegebenenfalls eine Auswahl für die Authentikation zu gestatten.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke mißt die Feldstärke eines der übertragenen Signale, und zwar des Bereichsabgrenzungssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein.

Um eine präzise Standortbestimmung unter Verwendung des RSSI-Signals zu gewährleisten, kann die erste Einrichtung 4 wenigstens zwei Sender 24a, 24b mit zugehörigen Empfängern enthalten, wie in Fig. 2 zu sehen ist. Je einer dieser Sender 24a, 24b ist im Türbereich des Kraftfahrzeugs 1 angeordnet, und zwar der Sender 24a in der linken und der Sender 24b in der rechten Autotüre 6. Die beiden Sender 24a, 24b der ersten Einrichtung 4 senden nacheinander jeweils ein Bereichsabgrenzungssignal 13a, 13b, beispielsweise zunächst der Sender 24a und anschließend der Sender 24b. Diese beiden Bereichsabgrenzungssignale 13a, 13b werden dann vom Sender/Empfänger 17 der zweiten Einrichtung 5 empfangen und daraus entsprechende RSSI-Signale gebildet. Diese am RSSI-Ausgang 21 anliegenden RSSI-Signale der von den beiden Sendern 24a, 24b empfangenen Signale 13a, 13b werden dann zur Standortbestimmung der zweiten Einrichtung 5 verwendet. Ergänzend kann noch ein weiterer Sender 24c als dritter Sender der ersten Einrichtung 4 im Heckbereich des Kraftfahrzeugs 1 angeordnet sein. Zusätzlich wird dann das RSSI-Signal des vom dritten Sender 24c empfangenen Signals 13c zur weiteren Präzisierung der Standortbestimmung mit herangezogen. Diese RSSI-Signale entsprechen jeweils einem bestimmten Abstand d1, d2, d3 der zweiten Einrichtung 5 vom zugehörigen Sender 24a, 24b, 24c, so daß der genaue Standort der zweiten Einrichtung 5 in Bezug auf das Kraftfahrzeug 1 in der Art einer Schnittpunktbestimmung dieser Abstände d1, d2 und d3 durch den Mikroprozessor 18 bestimmt werden kann. Insbesondere läßt sich somit zur Auslösung der jeweiligen KeylessEntry/Go-Funktionalität feststellen, ob die zweite Einrichtung 5 im Außenraum 23 oder im Innenraum 22 des Kraftfahrzeugs 1 befindlich ist.

Besonders bevorzugt ist, daß die Trägerwelle 25 für das erste Signal 12 als Wecksignal und/oder das dritte Signal 13 als Bereichsabgrenzungsignal beziehungsweise die Teilsignale 13a, 13b, 13c des dritten Signals 13 eine im induktiven (NF-)Bereich liegende Frequenz aufweisen. Insbesondere kann diese Frequenz 20 kHz betragen. Vorteilhafterweise weist ein solches induktives Signal bereits eine begrenzte Reichweite auf. Dadurch wird erreicht, daß die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. In diesem Fall können zum einen Spulen als induktive Sender 24a, 24b, 24c verwendet werden und zum anderen besitzt die zweite Einrichtung 5 einen induktiven Empfänger 17.

Das erfindungsgemäße Verfahren zur Datenübertragung zwischen den beiden Einrichtungen 4, 5 ist entsprechend den obigen Ausführungen anhand eines Schließsystems 3 für ein Kraftfahrzeug 1 näher erläutert, eignet sich jedoch für beliebige Datenübertragungssysteme in sonstigen Anwendungen. Insbesondere läßt es sich vorteilhaft für ein leitungsungebundenes Weckverfahren zweier elektronischer Einrichtungen 4, 5 gemäß Fig. 3 einsetzen, bei dem die eine elektronische Einrichtung 4 mittels eines Signals 12 die andere elektronische Einrichtung 5 von einem Ruhezustand in einen aktivierten Zustand umschaltet.

Desweiteren ist die Erfindung nicht auf das beschriebene und dargestellte Ausführungsbeispiel beschränkt. Sie umfaßt vielmehr auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: (erstes) Signal / Wecksignal
- 13:: (drittes) Signal / Bereichsabgrenzungssignal
- 13a:: Teilsignal (des dritten Signals vom linken Türbereich)
- 13b:: Teilsignal (des dritten Signals vom rechten Türbereich)
- 13c:: Teilsignal (des dritten Signals vom Heckbereich)
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 24a:: Sender (im linken Türbereich)
- 24b:: Sender (im rechten Türbereich)
- 24c:: Sender (im Heckbereich)
- 25:: (modulierte) Trägerwelle
- 26:: Datum / Weck-Pattern
- 27:: Wechsel (von Bit) / Bitwechsel
- 28:: Phasensprung
- 29:: (zweites) Signal / Selektionssignal
- 30:: Schalter (im Türgriff)
- 31:: Schalter (im Heckgriff)
- 32:: (Näherungs)Sensor (im Türgriff)
- 33:: Heckgriff
- 34,35:: (aufeinanderfolgende, gleichbleibende) Bits
- 36:: (fortlaufende) Phase

## Patentansprüche

1. Verfahren zur Übertragung von Daten zwischen zwei Einrichtungen (4, 5), wobei die beiden Einrichtungen (4, 5) zu deren bestimmungsgemäßen Betrieb Mittel zum Senden und/oder Empfangen von Signalen (7) mittels einer insbesondere elektromagnetischen Trägerwelle (25) im niederfrequenten Bereich besitzen, wobei das zwischen den beiden Einrichtungen (4, 5) übertragene Signal (12) ein aus Bits bestehendes Datum (26) enthält, und wobei das Signal (12) mittels eines Phasensprungverfahrens moduliert ist, derart daß der Wechsel (27) eines Bits im Datum (26) durch die sprunghafte Änderung der Phase in der Art eines Phasensprungs (28) der Trägerwelle (25) codiert ist, **dadurch gekennzeichnet, daß** die eine Einrichtung (5) zwischen einem aktivierten Zustand, bei dem eine gewisse Funktionalität ermöglicht ist, und einem Ruhezustand, bei dem lediglich eine gegenüber dem aktivierten Zustand verringerte Funktionalität ermöglicht ist, mit gegebenenfalls verringerter Energieaufnahme umschaltbar ist, daß das von der anderen Einrichtung (4) ausgesandte Signal (12) die eine Einrichtung zwischen dem Ruhezustand und dem aktivierten Zustand umschaltet, insbesondere in der Art eines Wecksignals vom Ruhezustand in den aktivierten Zustand überführt, und daß das Wecksignal (12) phasensprungcodiert ist.

2. Verfahren zur Übertragung von Daten nach Anspruch 1, **dadurch gekennzeichnet, daß** der Phasensprung (28) beim Phasensprungverfahren in etwa ganzzahlige Vielfache von 90°, insbesondere 180°, beträgt.

3. Verfahren zur Übertragung von Daten nach Anspruch 1 oder 2, **dadurch gekennzeichnet, daß** die Trägerwelle (25) für das Signal (12) eine im induktiven, niederfrequenten (NF-)Bereich liegende Frequenz, die insbesondere in etwa 20 kHz beträgt, aufweist.

4. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o. dgl. ausgebildeten zweiten Einrichtung (5), wobei die beiden Einrichtungen (4, 5) zu deren bestimmungsgemäßen Betrieb Mittel zum Senden und/oder Empfangen von Signalen (7) mittels einer insbesondere elektromagnetischen Trägerwelle (25) besitzen, wobei wenigstens ein Signal (12) ein aus Bits bestehendes Datum (26) enthält, und wobei das wenigstens eine Signal (12) mittels eines Phasensprungverfahrens moduliert
ist, derart daß der Wechsel (27) eines Bits im Datum (26) durch die sprunghafte Änderung der Phase in der Art eines Phasensprungs (28) der Trägerwelle (25) codiert ist, **dadurch gekennzeichnet, daß** die zweite Einrichtung (5) zwischen einem aktivierten Zustand, bei dem eine gewisse Funktionalität ermöglicht ist, und einem Ruhezustand, bei dem lediglich eine gegenüber dem aktivierten Zustand verringerte Funktionalität ermöglicht ist, mit gegebenenfalls verringerter Energieaufnahme umschaltbar ist, daß die erste Einrichtung (4) ein erstes elektromagnetisches Signal (12) für die zugehörige zweite Einrichtung (5) als Wecksignal sendet, derart daß die zweite Einrichtung (5) aus dem Ruhezustand mit gegebenenfalls verringertem Energiebedarf in den aktivierten Zustand für den bestimmungsgemäßen Betrieb übergeführt wird, und daß das Wecksignal (12) phasensprungcodiert ist.

5. Schließsystem nach Anspruch 4, **dadurch gekennzeichnet, daß** der Phasensprung (28) beim Phasensprungverfahren in etwa ganzzahlige Vielfache von 90°, insbesondere 180°, beträgt.

6. Schließsystem nach Anspruch 4 oder 5, **dadurch gekennzeichnet, daß** das erste elektromagnetische Signal (12) wenigstens ein aus Bits bestehendes Datum (26) in der Art eines Weck-Patterns enthält, daß vorzugsweise das Weck-Pattern (26) mittels des Phasensprungverfahrens auf die Trägerwelle (25) moduliert ist, und daß weiter vorzugsweise die zweite Einrichtung (5) lediglich bei einem vorbestimmten Weck-Pattern (26) in den aktivierten Zustand übergeht.

7. Schließsystem nach einem der Ansprüche 4 bis 6, **dadurch gekennzeichnet, daß** die erste Einrichtung (4) nach Aussenden des ersten elektromagnetischens Signals (12) wenigstens ein weiteres, insbesondere drittes elektromagnetisches Signal (13) als Bereichsabgrenzungssignal sendet, derart daß die zugehörige zweite Einrichtung (5) deren Standort in Bezug auf die erste Einrichtung (4), insbesondere am und/oder im Kraftfahrzeug (1), bestimmen kann, daß vorzugsweise nachfolgend die zweite Einrichtung (5) ein den Standort beinhaltendes weiteres, insbesondere viertes Signal (14) zur ersten Einrichtung (4) sendet, daß weiter vorzugsweise ein fünftes elektromagnetisches Signal (15) zwischen der zweiten Einrichtung (5) und der ersten Einrichtung (4) als ein codiertes Betriebssignal (15) zur Authentikation der zweiten Einrichtung (5) übertragen wird, so daß nach positiver Auswertung des übertragenen Betriebssignals (15) bei berechtigter zweiter Einrichtung (5) eine Änderung des Zustandes der ersten Einrichtung (4) bewirkbar ist, wobei das der Authentikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und daß noch weiter vorzugsweise die erste Einrichtung (4) zwischen dem ersten und dem dritten Signal (12, 13) ein zweites elektromagnetisches Signal (29) zur zweiten Einrichtung (5) als Selektionssignal sendet, wobei insbesondere das zweite Signal (29) eine Information über die Identität des Kraftfahrzeugs (1) enthält, derart daß zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

8. Schließsystem nach einem der Ansprüche 4 bis 7, **dadurch gekennzeichnet, daß** die Trägerwelle (25) für das erste Signal (12) und/oder das dritte Signal (13) und/oder Teilsignale (13a, b, c) des dritten Signals (13) eine im induktiven, niederfrequenten (NF) Bereich liegende Frequenz, die insbesondere in etwa 20 kHz beträgt, aufweist.

9. Schließsystem nach einem der Ansprüche 4 bis 8, **dadurch gekennzeichnet, daß** die erste Einrichtung (4) mehrere, vorzugsweise drei induktive Sender (24a, b, c) beziehungsweise als induktive Sender (24a, b, c) dienende Spulen besitzt, wobei insbesondere ein induktiver Sender (24a) der linken Kraftfahrzeugseite, ein weiterer induktiver Sender (24b) der rechten Kraftfahrzeugseite sowie schließlich noch ein weiterer induktiver Sender (24c) dem Kraftfahrzeugheck zugeordnet sind, und daß die zweite Einrichtung (5) einen induktiven Empfänger (17) besitzt.

10. Schließsystem nach einem der Ansprüche 4 bis 9, **dadurch gekennzeichnet, daß** im Türgriff (16), Heckgriff (33) o. dgl. des Kraftfahrzeugs (1) ein durch den Benutzer (2) manuell betätigbarer Schalter (30, 31) und/oder beispielsweise kapazitiv arbeitender Näherungssensor (32) zum Auslösen des Signals (7) für die Zugangsberechtigung zum Kraftfahrzeug (1) angeordnet ist.

11. Schließsystem nach einem der Ansprüche 4 bis 10, **dadurch gekennzeichnet, daß** am Gangwahlhebel, am Zündschloß (9), im Armaturenbrett, in der Mittelkonsole o. dgl. ein durch den Benutzer manuell betätigbarer Start/Stop-Schalter (11) zum Auslösen des Signals (7) für die Fahrberechtigung des Kraftfahrzeugs (1) angeordnet ist.

## Claims

1. A method for transmitting data between two devices (4, 5), wherein for the intended use thereof, both devices (4, 5) have means for sending and/or receiving signals (7) by means of a carrier wave (25), especially an electromagnetic carrier wave, in the low-frequency range, wherein the signal (12) transmitted between said two devices (4, 5) includes a datum (26) consisting of bits, and wherein the signal (12) is modulated by means of a phase-shift keying method so that the change (27) of one bit in the datum (26) is coded by the discrete modification of the phase in the manner of a phase shift (28) of the carrier wave (25), **characterized in that** the one device (5) can be switched between an activated state in which some functionality is enabled and a sleep state in which only reduced functionality with respect to the activated state, possibly with reduced energy consumption, is enabled, **in that** the signal (12) emitted by the other device (4) switches the one device between the sleep state and the activated state, in particular transitioning the same in the manner of a wake-up signal from the sleep state into the activated state, and **in that** the wake-up signal (12) is phase-shift coded.

2. The data transmission method according to claim 1, **characterized in that** the phase shift (28) in the phase-shift keying method approximately corresponds to integer multiples of 90°, in particular 180°.

3. The data transmission method according to claim 1 or 2, **characterized in that** for the signal (12), the carrier wave (25) has a frequency in the inductive, low-frequency (NF) range which is about 20 kHz in particular.

4. A locking system, in particular for access and/or driving authorization in a motor vehicle (1) in the manner of a keyless entry/go functionality, with a first device (4) made as a control device and having at least two states, such as a control device for unlocking and/or locking car doors (6), the ignition lock (9), the steering wheel lock (10), for enabling and/or disabling the engine immobilizer, the motor control unit, or the like, and with a second device (5) made in the manner of an electronic key, an ID generator, a chip card, or the like, wherein for the intended use thereof, both devices (4, 5) have means for sending and/or receiving signals (7) by means of a carrier wave (25), especially an electromagnetic carrier wave, wherein at least one signal (12) includes a datum (26) consisting of bits, and wherein said at least one signal (12) is modulated by means of a phase-shift keying method so that the change (27) of one bit in the datum (26) is coded by the discrete modification of the phase in the manner of a phase shift (28) of the carrier wave (25), **characterized in that** the second device (5) can be switched between an activated state in which some functionality is enabled and a sleep state in which only reduced functionality with respect to the activated state, possibly with reduced energy consumption, is enabled, **in that** the first device (4) sends a first electromagnetic signal (12) for the associated second device as a wake-up signal so as to transition the second device (5) from the sleep state possibly with lower energy requirements into the activated state for the intended use, and **in that** the wake-up signal (12) is phase-shift coded.

5. The locking system according to claim 4, **characterized in that** the phase shift (28) in the phase-shift keying method is approximately an integer multiple of 90°, in particular 180°.

6. The locking system according to claim 4 or 5, **characterized in that** the first electromagnetic signal (12) includes at least one datum (26) consisting of bits in the manner of a wake-up pattern, **in that** preferably the wake-up pattern (26) is modulated on the carrier wave (25) by means of the phase-shift keying method, and **in that** more preferably, the second device (5) transitions into the activated state only at a predetermined wake-up pattern (26).

7. The locking system according to any of claims 4 to 6, **characterized in that** after having sent out the first electromagnetic signal (12), the first device (4) sends at least one other, especially a third electromagnetic signal (13) as an area delimiting signal so that the associated second device (5) may determine the location thereof with respect to the first device (4) in particular on and/or in the motor vehicle (1), **in that** preferably subsequently the second device (5) sends to the first device (4) another, in particular a fourth signal (14) including the location, **in that** more preferably a fifth electromagnetic signal (15) is transmitted between the second device (5) and the first device (4) as a coded operating signal (15) for authentication of the second device (5) so that after positive evaluation of the transmitted operating signal (15), with the second device (5) being authorized, a change of the state of the first device (4) can be effected, wherein the fifth electromagnetic signal (15) used for authentication is transmitted preferably in a bidirectional communication consisting of several partial signals between the first and the second device (4, 5), and **in that** even more preferably, the first device (4) sends between the first and the third signal (12, 13) a second electromagnetic signal (29) to the second device (5) as a selection signal, wherein in particular the second signal (29) includes information on the identity of the motor vehicle (1) so that second devices (5) associated with the first device (4) will remain in the activated state, and second devices not associated and in the activated state will be returned to sleep mode.

8. The locking system according to any of claims 4 to 7, **characterized in that** the carrier wave (25) for the first signal (12) and/or the third signal (13) and/or partial signals (13a, b, c) of the third signal (13) has a frequency in the inductive, low-frequency (NF) range, in particularly of about 20 kHz.

9. The locking system according to any of claims 4 to 8, **characterized in that** the first device (4) has several, preferably three inductive transmitters (24a, b, c) or coils serving as inductive transmitters (24a, b, c), wherein in particular an inductive transmitter (24a) is associated with the left side of the motor vehicle, another inductive transmitter (24c) is associated with the right side of the motor vehicle, and finally yet another inductive transmitter (24c) is associated with the rear of the motor vehicle, and **in that** the second device (5) has an inductive receiver (17).

10. The locking system according to any of claims 4 to 9, **characterized in that** in the door handle (16), the rear gate handle (33), or the like, of the motor vehicle (1) a switch (30, 31) to be manually operated by the user (2) and/or for example a capacitively operating proximity sensor (32) for triggering the signal (7) for access authorization to the motor vehicle (1) is disposed.

11. The locking system according to any of the claims 4 to 10, **characterized in that** at the gear selector, the ignition lock (9), the dashboard, the center console, or the like, a start/stop switch (11) to be manually operated by the user for triggering the signal (7) for driving authorization of the motor vehicle (1) is disposed.

## Revendications

1. Procédé de transmission de données entre deux dispositifs (4, 5), dans lequel pour leur usage prévu, les deux dispositifs (4, 5) possèdent des moyens pour envoyer et/ou recevoir des signaux (7) à l'aide d'une onde porteuse (25) en particulier électromagnétique, dans la bande des basses fréquences, dans lequel le signal (12) transmis entre lesdits deux dispositifs (4, 5) comprend une donnée (26) composée de bits, et dans lequel le signal (12) est modulé au moyen d'un procédé à déplacement de phase de sorte que le changement (27) d'un bit dans la donnée (26) est codé par une modification discrète de la phase à la manière d'un déplacement de phase (28) de l'onde porteuse (25), **caractérisé en ce que** ledit un dispositif (5) peut être commuté entre un état activé dans lequel une certaine fonctionnalité est possible et un état de repos dans lequel seule une fonctionnalité réduite par rapport à l'état activé, éventuellement avec une consommation d'énergie réduite, est possible, **en ce que** le signal (12) émis par l'autre dispositif (4) commute ledit un dispositif entre l'état de repos et l'état activé, en particulier à la manière d'un signal de réveil qui le fait passer de l'état de repos à l'état activé, et **en ce que** le signal de réveil (12) est codé par déplacement de phase.

2. Procédé de transmission de données selon la revendication 1, **caractérisé en ce que** le déplacement de phase (28) dans le procédé à déplacement de phase correspond approximativement à des multiples entiers de 90°, en particulier à 180°.

3. Procédé de transmission de données selon la revendication 1 ou 2, **caractérisé en ce que** l'onde porteuse (25) pour le signal (12) présente une fréquence dans la bande inductive des basses fréquences (NF), en particulier environ 20 kHz.

4. Système de fermeture, en particulier pour l'autorisation d'accès et/ou de conduite dans un véhicule automobile (1) à la manière d'une fonctionnalité d'entrée/démarrage sans clé, avec un premier dispositif (4) réalisé sous la forme d'un dispositif de commande et possédant au moins deux états, comme un dispositif de commande pour déverrouiller et/ou verrouiller des portières de voiture (6), une serrure de contact (9), un verrou de direction (10), pour débloquer et/ou bloquer un système d'anti-démarrage, le contrôleur du moteur ou similaires, et avec un deuxième dispositif (5) réalisé à la manière d'une clé électronique, d'un générateur d'identification, d'une carte à puce ou similaires, dans lequel pour leur usage prévu, les deux dispositifs (4, 5) possèdent des moyens pour envoyer et/ou recevoir des signaux (7) à l'aide d'une onde porteuse (25) en particulier électromagnétique, dans au moins un signal (12) contient une donnée (26) composée de bits, et dans lequel ledit au moins un signal (12) est modulé à l'aide d'un procédé à déplacement de phase de telle sorte que le changement (27) d'un bit dans la donnée (26) est codé par la modification discrète de la phase à la manière d'un déplacement de phase (28) de l'onde porteuse (25), **caractérisé en ce que** le deuxième dispositif (5) peut être commuté entre un état activé dans lequel une certaine fonctionnalité est possible et un état de repos dans lequel seule une fonctionnalité réduite par rapport à l'état activé, éventuellement avec une consommation d'énergie réduite, est possible, **en ce que** le premier dispositif (4) envoie un premier signal électromagnétique (12) pour le deuxième dispositif (5) associé en tant que signal de réveil, de telle sorte qu'il fait passer le deuxième dispositif (5) de l'état de repos avec éventuellement des besoins en énergie réduits à l'état activé pour l'usage prévu, et **en ce que** le signal de réveil (12) est codé par déplacement de phase.

5. Système de fermeture selon la revendication 4, **caractérisé en ce que** le déplacement de phase (28) dans le procédé d'déplacement de phase est approximativement un multiple entier de 90°, en particulier 180°.

6. Système de fermeture selon la revendication 4 ou 5, **caractérisé en ce que** le premier signal électromagnétique (12) comprend au moins une donnée (26) composée de bits, à la manière d'un motif de réveil, **en ce que** de préférence le motif de réveil (26) est modulé sur l'onde porteuse (25) à l'aide du procédé à déplacement de phase, et **en ce que** de plus grande préférence, le deuxième dispositif (5) passe à l'état activé seulement dans à l'occasion d'un motif de réveil prédéterminé (26).

7. Système de fermeture selon l'une quelconque des revendications 4 à 6, **caractérisé en ce qu'**après avoir envoyé le premier signal électromagnétique (12), le premier dispositif (4) envoie au moins un autre, en particulier un troisième signal électromagnétique (13) en tant que signal de délimitation de zone, de sorte que le deuxième dispositif (5) associé peut déterminer son emplacement par rapport au premier dispositif (4) en particulier sur et/ou dans le véhicule automobile (1), **en ce que** de préférence par la suite, le deuxième dispositif (5) envoie au premier dispositif (4) un autre, en particulier un quatrième signal (14) comprenant l'emplacement, et **en ce que** de plus grande préférence encore, un cinquième signal électromagnétique (15) est transmis entre le deuxième dispositif (5) et le premier dispositif (4) en tant que signal opérationnel codé (15) pour l'authentification du deuxième dispositif (5) de sorte qu'après une évaluation positive du signal opérationnel transmis (15), le deuxième dispositif (5) étant autorisé, un changement de l'état du premier dispositif (4) peut être obtenu, dans lequel le cinquième signal électromagnétique (15) servant à l'authentification est transmis de préférence dans une communication bidirectionnelle composée de plusieurs signaux partiels entre le premier et le deuxième dispositif (4, 5), et **en ce que** de plus grande préférence encore, le premier dispositif (4) envoie entre le premier et le troisième signal (12, 13) un deuxième signal électromagnétique (29) au deuxième dispositif (5) en tant que signal de sélection, dans lequel en particulier le deuxième signal (29) comprend une information concernant l'identité du véhicule automobile (1) de sorte que des deuxièmes dispositifs (5) associés au premier dispositif (4) restent à l'état activé et des deuxièmes dispositifs non associés et se trouvant à l'état activé soient ramenés au mode de repos.

8. Système de fermeture selon l'une quelconque des revendications 4 à 7, **caractérisé en ce que** l'onde porteuse (25) pour le premier signal (12) et/ou le troisième signal (13) et/ou des signaux partiels (13a, b, c) du troisième signal (13) présente une fréquence dans la bande inductive des basses fréquences (NF), en particulier environ 20 kHz.

9. Système de fermeture selon l'une quelconque des revendications 4 à 8, **caractérisé en ce que** le premier dispositif (4) possède plusieurs, de préférence trois émetteurs inductifs (24a, b, c) ou des bobines faisant office d'émetteurs inductifs (24a, b, c), dans lequel en particulier un émetteur inductif (24a) est associé au côté gauche du véhicule automobile, un autre émetteur inductif (24c) est associé au côté droit du véhicule automobile, et enfin encore un autre émetteur inductif (24c) est associé à l'arrière du véhicule automobile, et **en ce que** le deuxième dispositif (5) possède un récepteur inductif (17).

10. Système de fermeture selon l'une quelconque des revendications 4 à 9, **caractérisé en ce que** dans la poignée de porte (16), la poignée de hayon (33) ou similaires du véhicule automobile (1) est disposé un commutateur (30, 31) à actionner manuellement par l'utilisateur (2) et/ou un capteur de proximité (32) à fonctionnement capacitif par exemple pour déclencher le signal (7) pour l'autorisation d'accès au véhicule automobile (1).

11. Système de fermeture selon l'une quelconque des revendications 4 à 10, **caractérisé en ce que** sur le levier de vitesse, la serrure de contact (9), le tableau de bord, la console centrale ou similaires est disposé un commutateur de démarrage/arrêt (11) à actionner manuellement par l'utilisateur pour déclencher le signal (7) pour l'autorisation de conduite du véhicule automobile (1).
